# FASCICULE DE BREVET EUROPEEN

(11) **EP 1 780 113 B1**
(45) Date de publication et mention de la délivrance du brevet: **01.10.2008**
(21) Numéro de dépôt: 06291642.4
(22) Date de dépôt: 23.10.2006
(51) Int. Cl.: B62M 3/08

(54) **Pedale automatique de cycle à arceaux d'accrochage**
Automatische Fahrradpedale mit bügelförmiger Schuhplattenbefestigung
Automatic pedal with arc shaped cleat fastener

(30) Priorité: 28.10.2005 FR 0511110
(43) Date de publication de la demande: 02.05.2007
(73) Titulaire: Look Cycle International, 58000 Nevers (FR)
(72) Inventeur: Couturet, Jean-Pierre, 58000 Nevers (FR); Bouchez, Julien Pierre Jacques, 45220 Saint Germain des Pres (FR)
(74) Mandataire: Laget, Jean-Loup

(56) Documents cités:
- WO-A-99/14107
- DE-U1- 9 104 710
- FR-A- 2 691 696
- FR-A- 2 809 701
- FR-A- 2 822 127
- FR-A- 2 822 433
- US-A- 4 840 086
- US-A1- 2002 066 337
- US-B1- 6 205 885
- US-B1- 6 640 663

## Description

La présente invention concerne une pédale automatique de cycle permettant la solidarisation d'une chaussure de cycliste contre une surface d'accrochage prévue sur la pédale.

La notion de "automatique" est liée au fait que la chaussure porte un organe d'accrochage ou cale de retenue sous forme d'une plaque fixée sous la semelle de la chaussure du cycliste et destinée à déclencher une fixation à mains libres en sollicitant tout simplement cette cale contre des moyens de retenue prévus sur la pédale. Ces derniers sont reliés à un corps de la pédale monté rotatif sur un axe de pédale apte à être relié à une manivelle de pédalier. Ils comprennent en général un organe avant fixe d'engagement de la cale et un organe arrière mobile de retenue qui peut être élastiquement basculé entre une position de libération de la cale et une position de retenue de celui-ci contre une face d'accrochage sur le corps de pédale.

On connaît un grand nombre de pédales de ce genre qui diffèrent les unes des autres essentiellement par la mise en oeuvre des moyens de retenue automatique utilisés pour relier la cale au corps de pédale. Elles ont toutes en commun qu'elles comportent un moyen de rappel élastique de l'organe arrière mobile de retenue, en général constitué par un ressort hélicoïdal, ou parfois par un ressort à lame, qui précontraint cet organe vers une position de retenue de l'organe d'accrochage sur le corps de pédale.

Les premières pédales automatiques ne comportaient qu'une seule face d'accrochage, et plus tard, avec l'avènement du vélo tout terrain (VTT) sont apparues des pédales automatiques à double face d'accrochage dans lesquelles les moyens de retenue sont dédoublés sur deux faces d'accrochage diamétralement opposées de part et d'autre du corps de pédale. Le moyen de rappel peut sur ces pédales être séparé ou commun pour les deux faces d'accrochage. L'avantage d'une pédale à double face d'accrochage est que le cycliste n'est plus obligé de chercher le côté de la pédale pourvu des moyens de retenue de la cale, alors qu'il peut se trouver dans l'obligation de rechausser rapidement pour mieux assurer son équilibre tout en continuant de regarder devant lui.

La présence de boue dans ce type de pratique et la gêne qu'elle occasionne dans le fonctionnement des moyens de retenue de la cale a conduit à rechercher à faciliter l'évacuation de celle-ci en évidant au maximum le corps de pédale, ainsi qu'à améliorer l'accrochage par des organes les plus fins possibles. Ainsi sont apparus en particulier des organes de retenue en forme d'arceaux réalisés en fil métallique.

Un exemple d'une pédale pourvue de tels arceaux se retrouve dans le brevet US 6 205 885 qui décrit une pédale automatique pourvue d'une quadruple face d'accrochage, c'est-à-dire de quatre faces d'accrochage à 90° les unes des autres. Les moyens de retenue d'une cale fixée sous la semelle d'une chaussure de cycliste comportent selon ce brevet une première paire d'arceaux constitués par un fil métallique rigide. Ces arceaux sont solidaires du corps de pédale et montés diamétralement opposés de part et d'autre de celui-ci. Une deuxième paire d'arceaux, également constitués par des fils rigides, sont montés pivotants entre les arceaux fixes, de part et d'autre du corps de pédale. Les arceaux pivotants sont reliés rigidement l'un à l'autre et sont montés rotatifs autour de l'axe de pédale tout en étant sollicités vers une position de retenue de la cale par un moyen élastique de rappel sous forme d'un ressort hélicoïdal enfilé sur une douille du corps de pédale s'étendant autour de l'axe de pédale.

Cette pédale présente ainsi quatre faces d'accrochage de la cale sur le corps de pédale, chaque face d'accrochage étant définie entre un arceau pivotant et un arceau fixe. La cale peut aisément être mise en place sur une telle face d'accrochage lors d'une phase d'enclenchement en séparant angulairement un arceau pivotant d'un arceau fixe voisin se trouvant devant ou derrière l'arceau pivotant. La cale peut ensuite de manière connue en soi être libérée du plan d'accrochage par un mouvement de rotation de la chaussure lors d'une phase de déclenchement de la cale. Cette technique est bien connue dans ce domaine et ne sera pas décrite plus en détail.

Cependant, la pédale selon le brevet US 6 205 885 présente un certain nombre d'inconvénients, entre autres :
- la position relative des arceaux mobiles par rapport aux arceaux fixes est assurée par un ressort de rappel unique, alors que l'équilibrage des efforts et des courses angulaires demande une précision difficile à obtenir avec un organe de ce genre ;
- l'utilisation d'arceaux doubles fixes et d'arceaux doubles mobiles entraîne forcément un nombre pair des faces d'accrochage, ce qui limite les possibilités ;
- les arceaux sont imbriqués les uns dans les autres et doivent emprisonner le ressort de rappel, ce qui entraîne des contraintes d'encombrement lors de la conception, ainsi que des contraintes pour la fabrication et des difficultés lors de l'assemblage.

On connaît en outre du document FR-A-2 822 433 un exemple d'une pédale selon le préambule de la revendication 1, pourvue d'arceaux d'accrochage de ce genre. Les arceaux sont au nombre de deux ou quatre en formant une respectivement deux paires d'arceaux. Les deux arceaux de chaque paire sont formés à partir d'un fil élastique unique présentant des spires entourant un manchon traversé par l'axe de pédale. Ce fil constitue ainsi en même temps un moyen élastique de rappel des arceaux. Cependant, cette pédale est relativement compliquée à assembler et ne permet pas la précontrainte d'arceaux indépendants par l'application de contraintes combinées de flexion et de torsion des arceaux lors de l'assemblage de la pédale.

L'invention a pour but de remédier à ces inconvénients en proposant une pédale automatique de ce genre simple à fabriquer et à assembler, et qui comporte des arceaux d'accrochage tous indépendants les uns par rapport aux autres afin de permettre ainsi un nombre souhaitable, pair ou impair, de faces d'accrochage d'une cale.

L'objet de l'invention est une pédale automatique de cycle, comportant un corps de pédale monté rotatif sur un axe de pédale et pourvu de moyens de retenue d'un organe d'accrochage fixé sous une chaussure de cycliste, lesdits moyens de retenue comportant au moins deux arceaux présentant des branches opposées reliées audit corps de pédale, lesdits au moins deux arceaux étant disposés l'un après l'autre sur la périphérie dudit corps de pédale de manière à définir entre eux une face d'accrochage dudit organe d'accrochage contre ledit corps de pédale, lesdits au moins deux arceaux étant aptes à être sollicités l'un vers l'autre par un moyen élastique de rappel les ramenant dans une position de retenue dudit organe d'accrochage contre ladite surface d'accrochage, au moins un desdits au moins deux arceaux étant un arceau élastique constituant en outre ledit moyen élastique de rappel, caractérisé par le fait que lesdits arceaux sont des arceaux tous indépendants les uns par rapport aux autres, et que les extrémités de chaque arceau élastique présentent des axes de flexion décalés l'un par rapport à l'autre.

Selon d'autres caractéristiques de l'invention :
- lesdits axes de flexion sont définis dans un logement intérieur respectivement dans un logement extérieur de l'arceau sur ledit corps de pédale, et que lesdits logements intérieur et extérieur sont angulairement décalés l'un par rapport à l'autre autour de l'axe de rotation de la pédale ;
- les branches de chaque arceau présentent des longueurs différentes ;
- la branche la plus courte desdites branches de chaque arceau est la branche intérieure ;
- les branches de chaque arceau se trouvent dans des plans différents lorsque l'arceau est précontraint ;
- l'un desdits au moins deux arceaux est un arceau arrière formé par un fil métallique élastique respectif constituant ledit moyen de rappel;
- lesdits au moins deux arceaux sont formés par un fil métallique élastique respectif constituant ledit moyen de rappel ;
- lesdits arceaux sont au nombre de quatre et que lesdits logements intérieurs et extérieurs sont régulièrement répartis à 90° les uns des autres afin de recevoir les extrémités des arceaux de manière à définir quatre surfaces d'accrochage entre ceux-ci ;
- lesdits arceaux sont au nombre de trois et que lesdits logements intérieurs et extérieurs sont régulièrement répartis à 120° les uns des autres afin de recevoir les extrémités des arceaux de manière à définir trois surfaces d'accrochage entre ceux-ci;
- lesdits logements intérieurs et extérieurs s'étendent sensiblement parallèlement à l'axe dudit corps de pédale et sont disposés sur le même cercle centré sur l'axe de rotation de la pédale ;
- chaque logement intérieur d'un arceau est aligné sur un logement extérieur d'un arceau voisin ;
- lesdits logements sont formés par des alésages et les extrémités des arceaux présentent une forme cylindrique complémentaire ;
- lesdits logements extérieurs sont prévus sur un élément de support axialement extérieur relié au corps de pédale ;
- ledit élément extérieur est fixé au corps de pédale à l'aide d'une goupille traversant des trous prévus dans ledit élément de support extérieur et dans ledit corps de pédale ;
- lesdits logements intérieurs sont prévus sur un élément de support axialement intérieur relié au corps de pédale ;
- ledit élément intérieur est fixé au corps de pédale à l'aide de deux goupilles traversant des trous prévus dans ledit élément de support intérieur de manière à s'étendre de part et d'autre dudit axe de pédale ;
- les deux extrémités d'un même arceau sont dirigées vers l'intérieur, lesdits logements extérieurs étant prévus sur une face d'extrémité du corps de pédale ;
- un élément d'extrémité est fixé à ladite face d'extrémité dudit corps de pédale de manière à coiffer celle-ci ;
- lesdits arceaux prennent partiellement appui contre une bague amovible enfilée à l'extrémité du corps de pédale de manière à permettre le réglage de la précontrainte des arceaux en fonction de l'épaisseur de ladite bague ; et
- lesdits arceaux prennent partiellement appui contre des surfaces d'appui prévues dans des évidements prévus sur ledit corps de pédale.

D'autres caractéristiques et avantages de l'invention ressortiront de la description qui va suivre de deux modes de réalisation non limitatifs de l'invention, en référence aux figures annexées dans lesquelles :
- la figure 1 est une vue en perspective d'un premier mode de réalisation d'une pédale automatique à arceaux selon l'invention comportant quatre faces d'accrochage;
- la figure 2 est une vue en perspective éclatée de la pédale de la figure 1 ;
- la figure 3 est une vue en perspective d'une variante de la pédale des figures 1 et 2 illustrant, entre autres, la disposition des arceaux sur le corps de pédale ;
- la figure 4 est une vue schématique d'extrémité de la pédale des figures 1 à 3 illustrant le décalage angulaire entre les extrémités d'un même arceau ;
- la figure 5 est une vue en perspective éclatée d'un deuxième mode de réalisation d'une pédale automatique à arceaux selon l'invention comportant trois faces d'accrochage ; et
- la figure 6 est une vue d'extrémité de la pédale de la figure 5.

Dans les figures, les éléments identiques ou équivalents porteront les mêmes signes de référence.

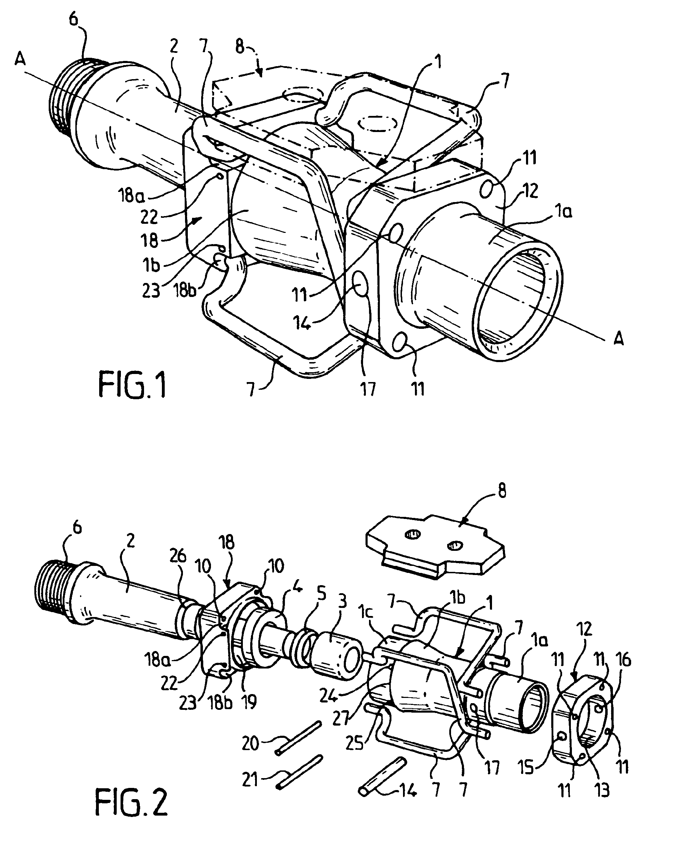

Un premier mode de réalisation de la pédale automatique à quatre surfaces d'accrochage selon l'invention sera maintenant décrit en référence aux figures 1 à 4.

La pédale automatique comporte un corps de pédale 1 monté rotatif sur un axe de pédale 2 par l'intermédiaire de roulements 3, 4 et d'une bague de bridage 5. L'axe de pédale 2 comporte à l'une de ses extrémités un filetage 6 apte à coopérer avec un taraudage sur une manivelle de pédalier de cycle (non représentée) de manière à assurer la liaison entre ces deux éléments.

La pédale est pourvue d'arceaux en U 7 disposés les uns après les autres sur la périphérie du corps de pédale 1 de manière à constituer des moyens de retenue d'un organe d'accrochage sous forme d'une plaque 8 fixée sous une chaussure de cycliste (non représentée sur les figures).

Dans l'exemple du premier mode de réalisation illustré sur les figures 1 à 4, les arceaux sont au nombre de quatre.

Chaque arceau 7 est constitué par un fil métallique globalement en forme de U présentant une partie centrale s'étendant sensiblement parallèlement à l'axe de pédale 2 et reliée à deux parties latérales en forme de branches intérieure et extérieure s'étendant sensiblement perpendiculairement à l'axe de pédale.

Les extrémités de l'arceau 7 sont pliées latéralement d'environ 90° pour être reçues dans des logements prévus sur le corps de pédale 1 et s'étendant sensiblement parallèlement à l'axe de celui-ci. Les extrémités de chaque arceau sont plus précisément reçues dans un logement axialement intérieur 10 et dans un logement axialement extérieur 11.

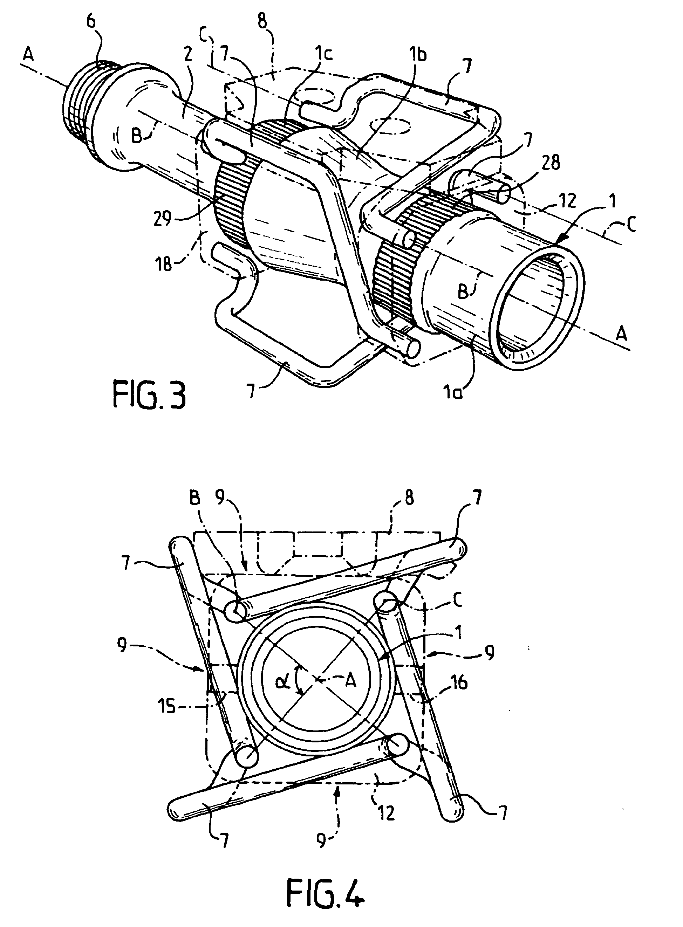

Ces logements intérieur et extérieur sont régulièrement répartis à un angle α de 90° les uns des autres. Les quatre arceaux définissent ainsi entre eux quatre faces d'accrochage 9 (voir figure 4) régulièrement réparties sur la périphérie du corps de pédale 1.

Selon l'invention, le fil métallique de l'arceau est élastique afin de constituer en outre un moyen élastique de rappel de l'arceau en utilisant élasticité innée de celui-ci. Selon une caractéristique essentielle de l'invention, les extrémités de cet arceau élastique présentent des axes de flexion B-B respectivement C-C décalés l'un par rapport à l'autre, c'est-à-dire que ces axes de flexion sont non alignés (voir figures 3 et 4).

Selon une autre caractéristique de l'invention, le logement intérieur 10 et le logement extérieur 11 de l'arceau sont angulairement décalés l'un par rapport à l'autre autour de l'axe de rotation A-A de la pédale. Ils permettent la précontrainte de l'arceau par l'application de contraintes combinées de flexion et de torsion lors de l'assemblage de la pédale, comme cela sera expliqué plus en détail par la suite.

Par conséquent, les branches de chaque arceau 7 présentent des longueurs différentes, la branche la plus courte étant la branche intérieure, alors que la branche la plus longue est la branche extérieure qui repose contre le corps de pédale 1 de manière à être sollicitée latéralement vers l'extérieur, ce qui fait que les deux branches de l'arceau ne se trouvent plus dans le même plan (voir figure 4). En effet, les plans des deux branches de l'arceau forment un angle aigu lorsque l'arceau est précontraint lors de l'assemblage de la pédale.

Dans l'exemple illustré, ce corps de pédale 1 a la forme d'un corps de révolution avec une première partie cylindrique extérieure 1a suivie d'une partie intérieure tronconique 1b ayant son extrémité évasée dirigée vers l'intérieur.

Grâce à son élasticité, l'arceau 7, qu'il soit précontraint ou non, est apte à être élastiquement déformé lorsqu'il est soumis à des contraintes combinées de flexion et de torsion lors de l'accrochage dudit organe d'accrochage contre ladite face d'accrochage et lors de sa libération de celle-ci.

Avantageusement, les logements 10, 11 sont des alésages et les extrémités des arceaux présentent une forme cylindrique complémentaire.

Dans le cas d'une face d'accrochage unique délimitée par deux arceaux, il suffit que l'un des arceaux, de préférence l'arceau arrière 7, soit formé par un fil métallique élastique, alors que l'arceau avant peut être parfaitement rigide.

Dans le cas d'un nombre pair d'arceaux, un arceau sur deux peut également être formé par un fil métallique élastique.

Dans l'exemple illustré sur les figures 1 à 4, les logements extérieurs 11 sont prévus sur un élément de support rapporté 12 axialement extérieur et relié au corps de pédale 1. Cet élément de support extérieur 12 a la forme d'une plaque globalement carrée qui comporte un trou traversant central 13 permettant d'enfiler cet élément sur la partie cylindrique 1a du corps de pédale 1 en introduisant simultanément les extrémités des arceaux 7 dans les logements 11 prévus à cet effet sur cet élément de support extérieur.

L'élément de support extérieur 12 est dans l'exemple illustré sur les figures 1 et 2 fixé sur le corps de pédale 1 à l'aide d'une goupille 14 qui s'étend à travers deux trous traversant 15, 16 diamétralement opposés prévus dans cet élément de support extérieur et deux autres trous traversant prévus sur le corps de pédale 1 et dont un seul (17) est représenté.

Les logements intérieurs 10 sont quant à eux prévus sur un élément de support rapporté 18 axialement intérieur et relié au corps de pédale 1. Cet élément de support intérieur 18 a une forme analogue à celle du premier élément de support 12 et comporte un trou traversant central 19 permettant d'enfiler cet élément sur une deuxième partie cylindrique 1c du corps de pédale 1 qui fait suite à la partie tronconique 1b et qui présente un diamètre réduit par rapport à l'extrémité évasée de celle-ci.

L'élément de support intérieur 18 comporte avantageusement, sur sa face d'extrémité tournée vers l'extérieur, des évidements supérieurs respectivement inférieurs 18a, 18b formant des surfaces d'appui pour les branches courtes des arceaux 7.

L'élément de support intérieur 18 est ici fixé sur le corps de pédale 1 à l'aide de deux goupilles 20, 21 qui s'étendent de part et d'autre de l'axe de pédale 2 à travers deux paires de trous 22, 23 prévues dans ce deuxième élément de support et deux autres paires de trous 24, 25 correspondantes prévues sur le corps de pédale 1. A chaque fois, un seul des trous de chaque paire de trous est représenté sur les figures.

L'élément de support intérieur 18 est bloqué axialement d'un côté par un épaulement 26 sur l'axe de pédale et un épaulement 27 formé dans la zone de transition entre la partie tronconique 1b et la deuxième partie cylindrique à diamètre réduit 2c.

Lors de l'assemblage, il suffit d'aligner les trous respectifs et d'y introduire les goupilles en commençant par le support intérieur 18 qui doit être fixé sur le corps de pédale 1 à l'aide des goupilles 20, 21. Ensuite, on met les extrémités des arceaux 7 en place dans leurs logements respectifs 10 sur le support intérieur 18, et finalement les extrémités opposées des arceaux 7 sont mises en place dans leurs logements respectifs 11 sur le support extérieur 12 qui est enfilé sur le corps de pédale 1.

Il est pendant cette dernière phase d'assemblage avantageux d'effectuer un réglage initial de la précontrainte des arceaux en prévoyant qu'une légère rotation de l'élément de support extérieur 12 soit nécessaire afin d'aligner les trous 15, 16, 17 recevant la goupille 14 qui fixe l'élément de support extérieur sur le corps de pédale.

La figure 3 montre une variante du premier mode de réalisation de la pédale illustrée sur les figures 1 et 2. Dans cette variante, des éléments de support extérieur et intérieur 12, 18 des extrémités des arceaux 7 similaires à ceux déjà décrits sont utilisés, avec la différence cependant qu'à la place des goupilles 14, 20, 21 de la première variante, on utilise des cannelures 28, 29 prévues sur le corps de pédale 1.

Les cannelures 28 sont effectuées sur une section de la première partie cylindrique 1a du corps de pédale 1 afin de coopérer avec des cannelures complémentaires (non représentées) effectuées dans le trou central 13 de l'élément de support extérieur 12, alors que des cannelures 29 sont effectuées sur la deuxième partie cylindrique 1c du corps de pédale 1 afin de coopérer avec des cannelures complémentaires (non représentées) effectuées dans le trou central 19 de l'élément de support intérieur 18.

Lors de l'assemblage, on commence selon cette variante par faire coopérer les cannelures de l'élément de support intérieur 18 avec les cannelures 29 de la deuxième partie cylindrique 1c du corps de pédale 1 et on introduit ensuite les extrémités des arceaux 7 dans leurs logements respectifs 10 sur le support intérieur 18, et finalement les extrémités opposées des arceaux 7 sont mises en place dans leurs logements respectifs 11 sur le support extérieur 12 dont les cannelures sont amenées à coopérer avec les cannelures 28 prévues sur la première partie cylindrique 1a du corps de pédale 1.

Il est pendant cette phase d'assemblage avantageux d'effectuer un réglage initial de la précontrainte des arceaux en prévoyant une légère rotation de l'élément de support extérieur 12 juste avant de faire coopérer les cannelures de l'élément de support extérieur avec les cannelures sur le corps de pédale.

L'élément de support extérieur 12 peut, s'il n'est pas monté à force, être bloqué axialement d'une manière quelconque, par exemple par sertissage de l'extrémité extérieur du corps de pédale 1 ou tout simplement par une pièce rapportée à cette extrémité.

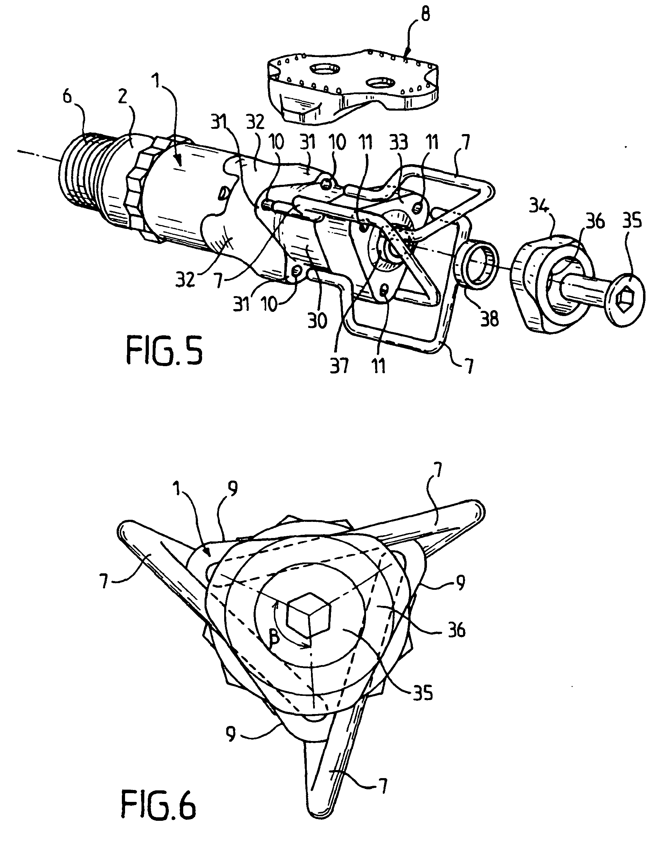

Un deuxième mode de réalisation de la pédale automatique selon l'invention est illustré aux figures 5 et 6.

La différence principale par rapport au premier mode de réalisation réside dans le fait que la pédale du deuxième mode de réalisation comporte trois arceaux 7 au lieu de quatre et que le montage de ces arceaux sur le corps de pédale 1 est différent.

Aussi bien les logements intérieurs 10 que les logements extérieurs 11 des arceaux 7 sont dans ce mode de réalisation réalisés directement dans le corps de pédale 1 qui a une forme globalement cylindrique. Le corps de pédale comporte un évidement périphérique sous forme d'une gorge 30 et les logements intérieurs 10 sont effectués dans la paroi axialement intérieure de cette gorge, dans une saillie arrondie respective 31. Ces saillies sont disposées en triangle et reliées les unes aux autres par des méplats 32 constituant des surfaces d'appui pour la semelle de la chaussure de cycliste.

Les logements extérieurs 11 sont effectués dans une face d'extrémité 33 à l'extrémité extérieure du corps de pédale 1 qui présente une forme globalement triangulaire et chaque logement 11 est placé à proximité d'un angle correspondant de cette forme triangulaire. Afin de permettre l'introduction des extrémités extérieures des arceaux 7, celles-ci sont dirigées vers l'intérieur.

Un élément d'extrémité de fixation 34 d'une forme triangulaire correspondant à celle de l'extrémité du corps de pédale 1 vient coiffer la face d'extrémité 33, avec interposition des branches longues des arceaux 7. L'élément d'extrémité 34 serre ainsi les branches longues des arceaux contre la face d'extrémité et est fixé au corps de pédale par une vis 35 s'étendant à travers un trou central 36 de cet élément d'extrémité.

Les surfaces latérales de l'extrémité extérieure du corps de pédale 1 ainsi que les surfaces latérales de l'élément d'extrémité 34 sont planes et alignées sur les méplats 32 du corps de pédale de manière à former des surfaces d'appui supplémentaires pour la semelle de la chaussure de cycliste.

Le corps de pédale 1 est sur sa face d'extrémité 33 pourvu d'une collerette 37 contre laquelle les branches longues des arceaux viennent en appui pour créer la précontrainte des arceaux lors de l'assemblage. La figure 5 montre une variante avantageuse dans laquelle une bague de réglage 38 est enfilée sur la collerette 37. Cette bague de réglage est amovible et remplaçable par une autre bague de réglage présentant une épaisseur différente de sorte que la précontrainte des arceaux 7 peut être réglée en fonction de l'épaisseur de la bague 38.

Par ailleurs, les extrémités de chaque arceau 7 sont reçues dans ces logements intérieur (10) et extérieur (11) qui sont régulièrement répartis à un angle β de 120° les uns des autres. Les trois arceaux définissent ainsi entre eux trois surfaces d'accrochage 9.

Aussi bien dans le premier que dans le deuxième mode de réalisation, les logements intérieurs et extérieurs sont de préférence placés sur le même cercle centré sur l'axe de rotation de la pédale.

En outre, chaque logement intérieur 10 d'un arceau 7 est avantageusement aligné sur un logement extérieur 11 d'un arceau voisin, ce qui permet de percer par exemple six logements, deux par deux, en trois opérations de perçage.

Il ressort de ce qui précède que l'invention permet de choisir un nombre quelconque de surfaces d'appui 9 de l'organe d'accrochage 8, ce nombre pouvant varier entre une seule et environ cinq surfaces d'appui. Il semble pourtant que le nombre de quatre est un nombre optimal pour les pédales automatique VTT, alors que le nombre de trois surfaces d'appui peut avantageusement être choisi pour les pédales de route.

Dans le cas ou l'on choisit une seule surface d'appui ou bien un nombre paire de surfaces de d'appui, il est possible de prévoir un arceau sur deux qui est rigide et fixé à demeure sur le corps de pédale.

Bien entendu, l'invention n'est pas limitée aux exemples illustrés et décrits et un grand nombre des caractéristiques décrites ci-dessus peuvent en effet être combinées par l'homme du métier qui en aura pris connaissance, ce qui lui permettra de concevoir d'autres variantes qui entrent dans le cadre de la présente invention.

## Revendications

1. Pédale automatique de cycle, comportant un corps de pédale (1) monté rotatif sur un axe de pédale (2) et pourvu de moyens de retenue (7) d'un organe d'accrochage (8) fixé sous une chaussure de cycliste, lesdits moyens de retenue comportant au moins deux arceaux (7) présentant des branches opposées reliées audit corps de pédale, lesdits au moins deux arceaux (7) étant disposés l'un après l'autre sur la périphérie dudit corps de pédale (1) de manière à définir entre eux une face d'accrochage (9) dudit organe d'accrochage (8) contre ledit corps de pédale (1), lesdits au moins deux arceaux (7) étant aptes à être sollicités l'un vers l'autre par un moyen élastique de rappel les ramenant dans une position de retenue dudit organe d'accrochage (8) contre ladite surface d'accrochage (9), au moins un desdits au moins deux arceaux étant un arceau élastique constituant en outre ledit moyen élastique de rappel, **caractérisée par le fait que** lesdits arceaux sont des arceaux tous indépendants les uns par rapport aux autres, et que les extrémités de chaque arceau élastique présentent des axes de flexion (B-B, C-C) décalés l'un par rapport à l'autre.

2. Pédale automatique selon la revendication 1, **caractérisée par le fait que** lesdits axes de flexion sont définis dans un logement intérieur (10) respectivement dans un logement extérieur (11) de l'arceau (7) sur ledit corps de pédale, et que lesdits logements intérieur et extérieur (10, 11) sont angulairement décalés (α; β) l'un par rapport à l'autre autour de l'axe de rotation (A-A) de la pédale.

3. Pédale automatique selon la revendication 2, **caractérisée par le fait que** les branches de chaque arceau (7) présentent des longueurs différentes.

4. Pédale automatique selon la revendication 3, **caractérisée par le fait que** la branche la plus courte desdites branches de chaque arceau (7) est la branche intérieure.

5. Pédale automatique selon l'une quelconque des revendications précédentes, **caractérisée par le fait que** les branches de chaque arceau (7) se trouvent dans des plans différents lorsque l'arceau est précontraint.

6. Pédale automatique selon l'une quelconque des revendications précédentes, **caractérisée par le fait que** l'un desdits au moins deux arceaux (7) est un arceau arrière formé par un fil métallique élastique.

7. Pédale automatique selon l'une quelconque des revendications précédentes, **caractérisée par le fait que** lesdits au moins deux arceaux (7) sont formés par un fil métallique élastique respectif.

8. Pédale automatique selon l'une quelconque des revendications précédentes, **caractérisée par le fait que** lesdits arceaux (7) sont au nombre de quatre et que lesdits logements intérieurs et extérieurs (10, 11) sont régulièrement répartis à 90° les uns des autres afin de recevoir les extrémités des arceaux (7) de manière à définir quatre surfaces d'accrochage (9) entre ceux-ci.

9. Pédale automatique selon l'une quelconque des revendications 1 à 8, **caractérisée par le fait que** lesdits arceaux (7) sont au nombre de trois et que lesdits logements intérieurs et extérieurs (10, 11) sont régulièrement répartis à 120° les uns des autres afin de recevoir les extrémités des arceaux de manière à définir trois surfaces d'accrochage entre ceux-ci.

10. Pédale automatique selon l'une quelconque des revendications précédentes, **caractérisée par le fait que** lesdits logements intérieurs et extérieurs (10, 11) s'étendent sensiblement parallèlement à l'axe dudit corps de pédale (1) et sont disposés sur le même cercle centré sur l'axe de rotation (A-A) de la pédale.

11. Pédale automatique selon l'une quelconque des revendications précédentes, **caractérisée par le fait que** chaque logement intérieur (10) d'un arceau (7) est aligné sur un logement extérieur (11) d'un arceau voisin (7).

12. Pédale automatique selon l'une quelconque des revendications précédentes, **caractérisée par le fait que** lesdits logements (10, 11) sont formés par des alésages et que les extrémités des arceaux (7) présentent une forme cylindrique complémentaire.

13. Pédale automatique selon l'une quelconque des revendications précédentes, **caractérisée par le fait que** lesdits logements extérieurs (11) sont prévus sur un élément de support axialement extérieur (12) relié au corps de pédale (1).

14. Pédale automatique selon la revendication 13, **caractérisée par le fait que** ledit élément extérieur (11) est fixé au corps de pédale (1) à l'aide d'une goupille (14) traversant des trous (15, 16) prévus dans ledit élément de support extérieur (12) et dans ledit corps de pédale (1).

15. Pédale automatique selon la revendication 13 ou 14, **caractérisée par le fait que** lesdits logements intérieurs (10) sont prévus sur un élément de support axialement intérieur (18) relié audit corps de pédale (1).

16. Pédale automatique selon la revendication 15, **caractérisée par le fait que** ledit élément intérieur (18) est fixé au corps de pédale à l'aide de deux goupilles (20, 21) traversant des trous (22, 23) prévus dans ledit élément de support intérieur (18) de manière à s'étendre de part et d'autre dudit axe de pédale (2).

17. Pédale automatique selon l'une quelconque des revendications précédentes, **caractérisée par le fait que** les deux extrémités d'un même arceau (7) sont dirigées vers l'intérieur, lesdits logements extérieurs (11) étant prévus sur une face d'extrémité (33) du corps de pédale (1).

18. Pédale automatique selon l'une quelconque des revendications précédentes, **caractérisée par le fait qu'**un élément d'extrémité (34) est fixé à ladite face d'extrémité (33) dudit corps de pédale (1) de manière à coiffer celle-ci.

19. Pédale automatique selon l'une quelconque des revendications précédentes, **caractérisée par le fait que** lesdits arceaux (7) prennent partiellement appui contre une bague amovible (38) enfilée à l'extrémité du corps de pédale (1) de manière à permettre le réglage de la précontrainte des arceaux (7) en fonction de l'épaisseur de ladite bague (38).

20. Pédale automatique selon l'une quelconque des revendications précédentes, **caractérisée par le fait que** lesdits arceaux (7) prennent partiellement appui contre des surfaces d'appui prévues dans des évidements (18a, 18b) prévus sur ledit corps de pédale (1).

## Claims

1. Automatic bicycle pedal, comprising a pedal body (1) mounted rotatably on a pedal axle (2) and provided with retaining means (7) for an engagement element (8) fixed underneath a cyclist's shoe, said retaining means comprising at least two arches (7) which have opposite branches connected to said pedal body, said at least two arches (7) being disposed one after the other on the periphery of said pedal body (1) so as to define between them an engagement surface (9) for said engagement element (8) against said pedal body (1), the said at least two arches (7) being designed to be urged toward each other by resilient return means returning them into a retaining position of said engagement element (8) against said engagement surface (9), at least one of said at least two arches being a resilient arch also constituting said resilient return means, **characterised by** the fact that the said arches are arches that are independent in relation to one another and that the ends of each resilient arch have bending axes (B-B, C-C) that are offset relative to each other.

2. Automatic pedal according to claim 1, **characterized by** the fact that said bending axes are defined in an inner recess (10) respectively in an outer recess (11) of the arch (7) on said pedal body, and that said inner and outer recesses (10, 11) are angularly offset (a; β) relative to each other about the axis of rotation (A-A) of the pedal.

3. Automatic pedal according to claim 2, **characterized by** the fact that the branches of each arch (7) have different lengths.

4. Automatic pedal according to claim 3, **characterized by** the fact that the shorter branch of said branches of each arch (7) is the inner branch.

5. Automatic pedal according to any one of the preceding claims, **characterized by** the fact that the branches of each arch (7) are located in different planes when the arch is pre-stressed.

6. Automatic pedal according to any one of the preceding claims, **characterized by** the fact that one of said at least two arches (7) is a rear arch formed by a resilient metal wire.

7. Automatic pedal according to any one of the preceding claims, **characterized by** the fact that said at least two arches (7) are formed by a respective resilient metal wire.

8. Automatic pedal according to any one of the preceding claims, **characterized by** the fact that said arches (7) are four in number and that said inner and outer recesses (10, 11) are regularly distributed at 90° relative to each other so as to receive the ends of the arches (7) and to define four engagement surfaces (9) between them.

9. Automatic pedal according to any one of the claims 1 to 8, **characterized by** the fact that said arches (7) are three in number and that said inner and outer recesses (10, 11) are regularly spaced 120° apart from each other so as to receive the ends of the arches in a manner to define between them three engagement surfaces.

10. Automatic pedal according to any one of the preceding claims, **characterized by** the fact that said inner and outer recesses (10, 11) extend substantially parallel to the axis of said pedal body (1) and are disposed on the same circle centred on the axis of rotation (A-A) of the pedal.

11. Automatic pedal according to any one of the preceding claims, **characterized by** the fact that each inner recess (10) of an arch (7) is aligned on an outer recess (11) of an adjacent arch (7).

12. Automatic pedal according to any one of the preceding claims, **characterized by** the fact that said recesses (10, 11) are formed by bores and that the ends of the arches (7) have a complementary cylindrical shape.

13. Automatic pedal according to any one of the preceding claims,
**characterized by** the fact that said outer recesses (11) are provided on an axially outer support element (12) connected to the pedal body (1).

14. Automatic pedal according to claim 13, **characterized by** the fact that said outer element (11) is fixed to the pedal body (1) by means of a pin (14) passing through holes (15, 16) provided in said outer support element (12) and in said pedal body (1).

15. Automatic pedal according to claim 13 or 14, **characterized by** the fact that said inner recesses (10) are provided on an axially inner support element (18) connected to said pedal body (1).

16. Automatic pedal according to claim 15, **characterized by** the fact that said inner element (18) is fixed to the pedal body by means of two pins (20, 21) passing through holes (22, 23) provided in said inner support element (18) so as to extend on opposite sides of said pedal axle (2).

17. Automatic pedal according to any one of the preceding claims, **characterized by** the fact that the two ends of a same arch (7) are directed inwardly, said outer recesses (11) being provided on an end surface (33) of the pedal body (1).

18. Automatic pedal according to any one of the preceding claims, **characterized by** the fact that an end element (34) is fixed to said end surface (33) of said pedal body (1) so as to cap the latter.

19. Automatic pedal according to any one of the preceding claims, **characterized by** the fact that said arches (7) bear partially against a removable ring (38) threaded onto the end of the pedal body (1) so as to permit the adjustment of the pre-stress of the arches (7) as a function of the thickness of said ring (38).

20. Automatic pedal according to any one of the preceding claims,
**characterized by** the fact that said arches (7) partially bear against bearing surfaces provided in recesses (18a, 18b) provided on said pedal body (1).

## Patentansprüche

1. Automatisches Fahrradpedal, das einen Pedalkörper (1) aufweist, der drehbar an einer Pedalachse (2) angebracht ist, und das mit Haltemitteln (7) für ein Befestigungsorgan (8), das unter einem Fahrradschuh befestigt ist, versehen ist, wobei diese Haltemittel mindestens zwei Bögen (7) umfassen, die zwei einander gegenüberliegende Schenkel aufweisen, die mit diesem Pedalkörper verbunden sind, wobei diese mindestens zwei Bögen (7) hintereinander auf dem Außenumfang des Pedalkörpers (1) dergestalt angeordnet sind, dass sie zwischen sich eine Befestigungsfläche (9) dieses Befestigungsorgans (8) an dem Pedalkörper (1) bilden, wobei diese mindestens zwei Bögen (7) zueinander hin durch ein federndes Rückstellmittel belastet werden können, welches sie in eine Halteposition dieses Befestigungsorgans (8) an dieser Befestigungsfläche (9) bringt, wobei mindestens einer dieser mindestens zwei Bögen ein elastischer Bogen ist, der ferner dieses federnde Rückstellmittel bildet,
**dadurch gekennzeichnet,**
**dass** diese Bögen vollkommen voneinander unabhängige Bögen sind und dass die Enden jedes elastischen Bogens Biegeachsen (B-B, C-C) aufweisen, die zueinander versetzt sind.

2. Automatisches Fahrradpedal nach Anspruch 1,
**dadurch gekennzeichnet,**
**dass** diese Biegeachsen in einer inneren Aufnahme (10) bzw. einer äußeren Aufnahme (11) des Bogens (7) an diesem Pedalkörper gebildet sind und dass diese innere und äußere Aufnahmen (10, 11) winkelig zueinander versetzt (α; β) um die Drehachse (A-A) des Pedals herum angeordnet sind.

3. Automatisches Fahrradpedal nach Anspruch 2,
**dadurch gekennzeichnet,**
**dass** die Schenkel jedes Bogens (7) unterschiedliche Längen aufweisen.

4. Automatisches Fahrradpedal nach Anspruch 3,
**dadurch gekennzeichnet,**
**dass** von diesen Schenkeln jedes Bogens (7) der kürzere Schenkel der innere Schenkel ist.

5. Automatisches Fahrradpedal nach einem der vorherigen Ansprüche,
**dadurch gekennzeichnet,**
**dass** die Schenkel jedes Bogens (7) sich in unterschiedlichen Ebenen befinden, wenn der Bogen vorgespannt ist.

6. Automatisches Fahrradpedal nach einem der vorherigen Ansprüche,
**dadurch gekennzeichnet,**
**dass** einer dieser mindestens zwei Bögen (7) ein hinterer Bogen ist, der von einem elastischen Metalldraht gebildet wird.

7. Automatisches Fahrradpedal nach einem der vorherigen Ansprüche,
**dadurch gekennzeichnet,**
**dass** diese mindestens zwei Bögen (7) jeweils von einem elastischen Metalldraht gebildet werden.

8. Automatisches Fahrradpedal nach einem der vorherigen Ansprüche,
**dadurch gekennzeichnet,**
**dass** diese Bögen (7) vier an der Zahl sind und dass diese inneren und äußeren Aufnahmen (10, 11) im 90°-Winkel voneinander regelmäßig verteilt angeordnet sind, um die Enden der Bögen (7) dergestalt aufzunehmen, dass zwischen diesen vier Befestigungsflächen (9) gebildet werden.

9. Automatisches Fahrradpedal nach einem der Ansprüche 1 bis 8,
**dadurch gekennzeichnet,**
**dass** diese Bögen (7) drei an der Zahl sind und dass diese inneren und äußeren Aufnahmen (10, 11) im 120°-Winkel voneinander regelmäßig verteilt angeordnet sind, um die Enden der Bögen dergestalt aufzunehmen, dass zwischen diesen drei Befestigungsflächen gebildet werden.

10. Automatisches Fahrradpedal nach einem der vorherigen Ansprüche,
**dadurch gekennzeichnet,**
**dass** diese inneren und äußeren Aufnahmen (10, 11) sich im Wesentlichen parallel zur Achse des Pedalkörpers (1) erstrecken und auf dem gleichen Kreis angeordnet sind, der auf die Drehachse (A-A) des Pedals zentriert ist.

11. Automatisches Fahrradpedal nach einem der vorherigen Ansprüche,
**dadurch gekennzeichnet,**
**dass** jede innere Aufnahme (10) eines Bogens (7) mit einer äußeren Aufnahme (11) eines benachbarten Bogens (7) fluchtet.

12. Automatisches Fahrradpedal nach einem der vorherigen Ansprüche,
**dadurch gekennzeichnet,**
**dass** diese Aufnahmen (10, 11) durch Bohrungen gebildet sind und dass die Enden der Bögen (7) eine komplementäre zylindrische Form aufweisen.

13. Automatisches Fahrradpedal nach einem der vorherigen Ansprüche,
**dadurch gekennzeichnet,**
**dass** diese äußeren Aufnahmen (11) an einem mit dem Pedalkörper (1) verbundenen, axial äußeren Halteelement (12) vorgesehen sind.

14. Automatisches Fahrradpedal nach Anspruch 13,
**dadurch gekennzeichnet,**
**dass** dieses äußere Element (12) an dem Pedalkörper (1) mittels eines Stifts (14) befestigt ist, der durch Löcher (15, 16) verläuft, die in diesem axial äußeren Halteelement (12) und in dem Pedalkörper (1) vorgesehen sind.

15. Automatisches Fahrradpedal nach Anspruch 13 oder 14,
**dadurch gekennzeichnet,**
**dass** die inneren Aufnahmen (10) an einem mit dem Pedalkörper (1) verbundenen, axial inneren Halteelement (18) vorgesehen sind.

16. Automatisches Fahrradpedal nach Anspruch 15,
**dadurch gekennzeichnet,**
**dass** dieses innere Element (18) an dem Pedalkörper mittels zweier Stifte (20, 21) befestigt ist, die durch Löcher (22, 23) verlaufen, die in diesem axial inneren Halteelement (18) dergestalt vorgesehen sind, dass sie sich beiderseits der Pedalachse (2) erstrecken.

17. Automatisches Fahrradpedal nach einem der vorherigen Ansprüche,
**dadurch gekennzeichnet,**
**dass** die beiden Enden eines und des gleichen Bogens (7) nach innen gerichtet sind, wobei die äußeren Aufnahmen (11) an einer Endseite (33) des Pedalkörpers (1) vorgesehen sind.

18. Automatisches Fahrradpedal nach einem der vorherigen Ansprüche,
**dadurch gekennzeichnet,**
**dass** ein Endelement (34) an der Endseite (33) des Pedalkörpers (1) dergestalt befestigt ist, dass es diese überdeckt.

19. Automatisches Fahrradpedal nach einem der vorherigen Ansprüche,
**dadurch gekennzeichnet,**
**dass** diese Bögen (7) teilweise an einem abnehmbaren Ring (38) anliegen, der auf das Ende des Pedalkörpers (1) aufgesteckt wird, so dass die Vorspannung der Bögen (7) in Abhängigkeit von der Dicke dieses Rings (38) eingestellt werden kann.

20. Automatisches Fahrradpedal nach einem der vorherigen Ansprüche,
**dadurch gekennzeichnet,**
**dass** diese Bögen (7) teilweise an Anlageflächen in Anlage kommen, die in Aussparungen (18a, 18b) an diesem Pedalkörper (1) vorgesehen sind.
